(19) **Europäisches Patentamt**
**European Patent Office**
**Office européen des brevets**

(11) **EP 3 077 661 B1**

(12) **EUROPEAN PATENT SPECIFICATION**

(45) Date of publication and mention
of the grant of the patent:
**28.09.2022 Bulletin 2022/39**

(21) Application number: **14808820.6**

(22) Date of filing: **27.11.2014**

(51) International Patent Classification (IPC):
***F03D 1/06*** (2006.01)

(52) Cooperative Patent Classification (CPC):
**F03D 1/0633;** F05B 2230/21; F05B 2230/60;
F05B 2240/30; F05B 2250/713; Y02E 10/72;
Y02E 10/728; Y02P 70/50

(86) International application number:
**PCT/DK2014/050404**

(87) International publication number:
**WO 2015/081962 (11.06.2015 Gazette 2015/23)**

(54) **PRE-BENT WIND TURBINE BLADE**

VORGEBOGENE WINDTURBINENSCHAUFEL

PALE D'ÉOLIENNE PRÉ-COURBÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.12.2013 US 201361911811 P**
**21.02.2014 DK 201470087**

(43) Date of publication of application:
**12.10.2016 Bulletin 2016/41**

(73) Proprietor: **Vestas Wind Systems A/S**
**8200 Aarhus N (DK)**

(72) Inventors:
- **VUILLAUME, Amaury**
**Houston, Texas 77043 (US)**
- **LINK, Ryan**
**Houston, Texas 77008 (US)**

(74) Representative: **Vestas Patents Department**
**Hedeager 42**
**8200 Aarhus N (DK)**

(56) References cited:
**EP-A1- 2 169 217       EP-A2- 2 141 355
EP-A2- 2 728 170       WO-A1-2013/083130
GB-A- 2 497 578**

- **JAMES LOCKE ET AL: "Design Studies for
Twist-Coupled Wind Turbine Blades", ASME 2003
WIND ENERGY SYMPOSIUM, 1 January 2003
(2003-01-01), pages 324-331, XP55167348, DOI:
10.1115/WIND2003-1043 ISBN:
978-1-56-347594-8**

## Description

## Technical Field

The invention relates generally to wind turbines, and more particularly to a wind turbine blade having a pre-bend that reduces instabilities at above-rated wind speeds, a wind turbine having such a wind turbine blade.

## Background

Wind turbines are used to produce electrical energy using a renewable resource and without combusting a fossil fuel. Generally, a wind turbine converts kinetic energy from the wind into electrical power. A horizontal-axis wind turbine includes a tower, a nacelle located at the apex of the tower, and a rotor having a plurality of blades and supported in the nacelle by means of a shaft. The shaft couples the rotor either directly or indirectly with a generator, which is housed inside the nacelle. Consequently, as wind forces the blades to rotate, electrical energy is produced by the generator.

In recent years, wind power has become a more attractive alternative energy source and the number of wind turbines, wind farms, etc. has significantly increased, both on land and off-shore. Additionally, the size of wind turbines has also significantly increased, with modern wind turbine blades extending between 50 and 70 meters in length, and is expected to further increase in the future. The increased length in the wind turbine blades has introduced a number of interesting design considerations for wind turbine designers and manufacturers. For example, with increasing blade length, the rearward deflection of the blade under aerodynamic loading also increases, with the maximum deflection typically occurring at the tip end of the blade. However, the as the tip thereof) closer to the wind turbine tower as the blade rotates past the tower. Should the deflection of the blade become significant, such as during unexpected high wind conditions, high turbulence conditions, or the like, it may be possible for the blade to come into contact with the tower. A tower strike may damage the tower or the blade such that repair or replacement procedures must be implemented to make the wind turbine operational once again. These procedures are expensive and may result in the wind turbine being inoperable and off-line for an extended period of time, costing the wind turbine owner valuable production time. Accordingly, the clearance between the blade and the tower is a constraint taken into consideration during the design phase of the wind turbine in order to prevent or reduce the likelihood of a potential tower strike during operation.

One approach for maintaining an acceptable clearance between the blade and the tower during operation under perhaps unexpected and harsh conditions is to limit or reduce the amount of blade deflection under aerodynamic load. This may be achieved, for example, by generally making the blades stiffer. In a conventional approach, wind turbine blades are typically made stiffer by simply adding more material during the manufacture of the wind turbine blade (e.g., adding more fiber material and resin in the manufacture of the blade). This approach, however, has a number of drawbacks. For example, as one might imagine, the amount of material to make a 50-70 meter cantilevered blade sufficiently stiff under aerodynamic load is not insignificant. Thus, the material costs, such as for a sufficient amount of fiber material and resin, for manufacturing sufficiently stiff wind turbine blades are relatively high. Additionally, the added material increases the overall weight of the wind turbine blade, which not only potentially negatively impacts its aerodynamic performance, but also makes storage, transportation, and assembly of the wind turbine blade more expensive and complex.

Another approach used to achieve increased clearance between the tower and the blade during operation is to use a pre-bent wind turbine blade. Pre-bent wind turbine blades are generally known, such as from EP 1019631. The broad concept of the pre-bent blade is to move away from an overly stiff blade design and allow for a certain amount of flexibility or deflection in the blade under load. By specifically designing some level of flexibility into the blade, the blade may be less stiff, and consequently the amount of material used in making the blade may be significantly reduced. Furthermore, to address the issue of clearance between the blade and tower, the blade may be designed with a pre-bend such that in its natural, non-operative state (undeflected shape), the blade curves or bends in the upwind direction away from the tower.

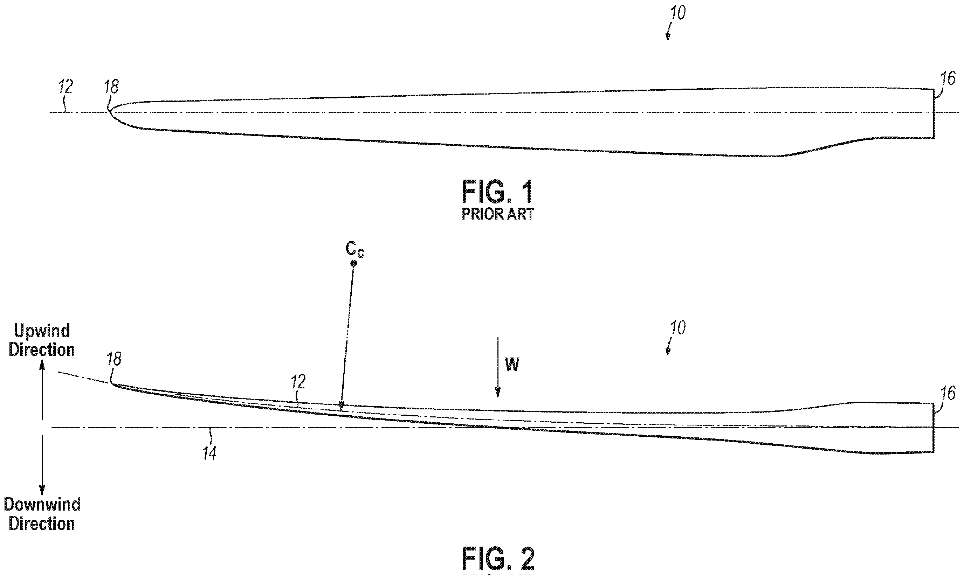

By way of example, a standard pre-bent blade 10 is illustrated in Figs. 1 and 2 from two different perspectives. As illustrated in these figures, the blade 10 is curved such that when the blade is installed on a wind turbine and oriented in an operative position (but aerodynamically unloaded), the bend is in the upwind direction, as best illustrated in Fig. 2. The standard pre-bend is characterized, such as by its longitudinal axis 12, as a generally smooth, non-inflected curve (e.g., such as a monotonic cubic function). For purposes of comparison, the longitudinal axis 14 of a straight blade is also illustrated in Fig. 2 so that the bend in the blade 10 is readily apparent. The curvature of the standard pre-bent blade 10 may be described and/or quantified in a number of ways. For example, the curvature (e.g., the second derivative of the function that defines the longitudinal axis 12) of the blade 10 in the reference frame as shown in Fig. 2 may be positive or negative (depending on how the coordinate axes are defined) along substantially the entire length of the blade from the root end 16 to the tip end 18. One possible exception is that the curvature may approach and possibly reach zero at the root 16 of the blade 10. The curvature of the standard pre-bent blade may also be described by its center of curvature $C_c$. In this regard, the curvature of the standard pre-bent blade 10 has a center of curvature $C_c$ on only one side of the blade 10. Thus, from the perspective of Fig. 2, the center of curvature $C_c$ of the blade 10 may be located on the upper or upwind side of the blade 10.

In any event, during aerodynamic loading of the standard pre-bent blades 10, the blades 10 defect in the downwind direction, as illustrated by arrow W, but maintain an increased clearance from the tower as compared to an aerodynamically-loaded straight wind turbine blade. Additionally, with pre-bent blades, the downwind deflection of the blades during use is generally associated with a slight increase in the swept area of the wind turbine rotor. This is in contrast with straight blades, wherein the downwind deflection of the blades during use is generally associated with a decrease in the swept area of the blades.

While standard pre-bent blades, such as that illustrated in Figs. 1 and 2, provide certain benefits as compared to straight blades, standard pre-bent blades also suffer from a number of drawbacks. In this regard, one major drawback to standard pre-bent blades is their poor aeroelastic performance in above-rated wind conditions. More particularly, standard pre-bent blades tend toward instability in above-rated wind conditions. The instability tends to manifest itself as an uncontrolled, dynamically complex whirling action near the tip end of the blade which results in diminished aerodynamic performance and fatigue life of the blade. While not being limited to any particular theory, it is believed that the root cause of the instability lies with the bend-twist coupling associated with the standard pre-bent blade. In above-rated wind conditions, the blade may be deflected downwind less than in below-rated wind conditions, and in some cases, actually bends forward, which is exacerbated by the pre-bend in the blade. As a result of the bend-twist coupling, as the blade bends in the edgewise direction, the blade also twists about its longitudinal axis toward stall. Thus, in above-rated wind conditions, the blade may be deflected downwind less than in below-rated wind conditions, resulting in a destabilizing action. In standard pre-bent blades, the twist component for the first edgewise mode shape tends to be a maximum at the tip end of the blade, which explains why the instability typically manifests itself at the tip of the blade. In any event, it is recognized that blades subject to the instability not only suffer from reduced performance, but also tend to have a higher rate of blade failure, increased fatigue, and generally have a shorter working life.

Currently, the primary approaches configured to alleviate the instability are to increase the torsional stiffness of the blade, such that the blade does not twist so easily with edgewise vibrations, or reduce the pre-bend in the blade so as to reduce the bend-twist coupling associated with the blade. Similar to the above, however, in order to increase the torsional stiffness of the blade, more material must be used to manufacture the blade, thus negating the material cost savings associated with pre-bent blades, and increasing the overall weight of the blade. Moreover, reducing the pre-bend moves the blade design back toward the straight blade, and may suffer from a lack of sufficient clearance between the tower and blade upon aerodynamic loading of the blade.

EP2141355 describes a wind turbine blade having a spanwise portion with a first curvature and another spanwise portion having a second curvature which is different to the first curvature. WO2013/083130 describes a wind turbine blade having a blade which when undeflected has a tip end positioned upwind of a root end. The blade also comprises a suction side winglet. EP2169217 describes a wind turbine blade with a non-straight axis.

Accordingly, there is a need in the wind turbine industry for a pre-bent wind turbine blade that does not suffer from the instabilities of standard pre-bent blades in above-rated wind conditions, and also provides a sufficient clearance between the blade and tower during aerodynamic loading of the blade.

## Summary

According to the present invention there is provided a wind turbine blade for a wind turbine according to claim 1.

The longitudinal axis of the elongate body may be defined according to the following equation:

$$P(x) = A \frac{\tanh\left(\frac{x-i}{s}\right) - \tanh\left(\frac{i}{s}\right)}{\tanh\left(\frac{L-i}{s}\right) - \tanh\left(\frac{i}{s}\right)}$$

where x is the distance along the blade from the root end 34; A is the pre-bend amplitude at the tip end of the blade; L is the length of the blade from the root end; i is the location of an inflection point; and s is the spread of the curve. The pre-bend amplitude may be between about 3% and about 7% of the blade length. Moreover, the spread s may be between about 10% and about 60% of the blade length.

A wind turbine comprises a tower, a nacelle disposed adjacent a top of the tower, and a rotor including a hub and at least one wind turbine blade extending from the hub. The wind turbine blade may be in accordance with any of the wind turbine blades described above.

## Brief Description of the Drawings

The accompanying drawings, which are incorporated in and constitute a part of this specification, illustrate an embodiment of the invention and, together with a general description of the invention given above, and the detailed description given below, serve to explain the invention.

Figs. 1 and 2 illustrate two views of a standard pre-bent wind turbine blade as is generally known in the art;
Fig. 3 is a partial perspective view of a wind turbine having wind turbine blades in accordance with an embodiment of the invention;

Figs. 4 and 5 illustrate two views of a pre-bent wind turbine blade in accordance with an embodiment of the invention;

Fig. 6 is a schematic illustration of the twist component of the first edgewise mode shape for a straight blade, a standard pre-bent blade, and a pre-bent blade in accordance with an embodiment of the invention;

Fig. 7 is a schematic illustration of the minimum damping ratio for a straight blade, a standard pre-bent blade, and a pre-bent blade in accordance with an embodiment of the invention.

## Detailed Description

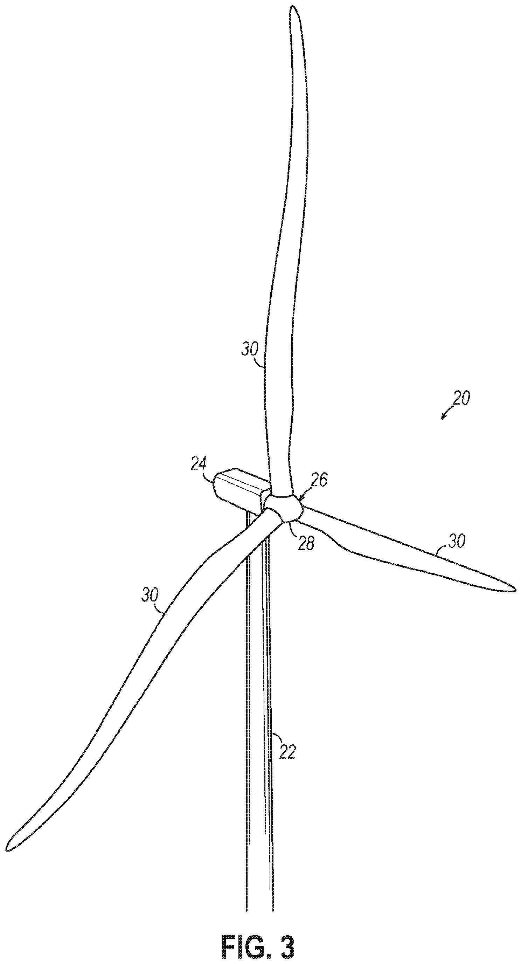

With reference to Fig. 3, a wind turbine 20 includes a tower 22, a nacelle 24 disposed at the apex of the tower 22, and a rotor 26 operatively coupled to a generator (not shown) housed inside the nacelle 24. In addition to the generator, the nacelle 24 houses miscellaneous components required for converting wind energy into electrical energy and various components needed to operate, control, and optimize the performance of the wind turbine 20. The tower 22 supports the load presented by the nacelle 24, the rotor 26, and other components of the wind turbine 20 that are housed inside the nacelle 24 and also operates to elevate the nacelle 24 and rotor 26 to a height above ground level or sea level, as may be the case, at which faster moving air currents of lower turbulence are typically found.

The rotor 26 of the wind turbine 20, which is represented as a horizontal-axis wind turbine, serves as the prime mover for the electromechanical system. Wind exceeding a minimum level will activate the rotor 26 and cause rotation in a plane substantially perpendicular to the wind direction. The rotor 26 of wind turbine 20 includes a central hub 28 and at least one blade 30 that projects outwardly from the central hub 28 at locations circumferentially distributed thereabout. In the representative embodiment, the rotor 26 includes three blades 30, but the number may vary. The blades 30 are configured to interact with the passing air flow to produce lift that causes the central hub 28 to spin about a longitudinal axis.

The wind turbine 20 may be included among a collection of similar wind turbines belonging to a wind farm or wind park that serves as a power generating plant connected by transmission lines with a power grid, such as a three-phase alternating current (AC) power grid. The power grid generally consists of a network of power stations, transmission circuits, and substations coupled by a network of transmission lines that transmit the power to loads in the form of end users and other customers of electrical utilities. Under normal circumstances, the electrical power is supplied from the generator to the power grid as known to a person having ordinary skill in the art.

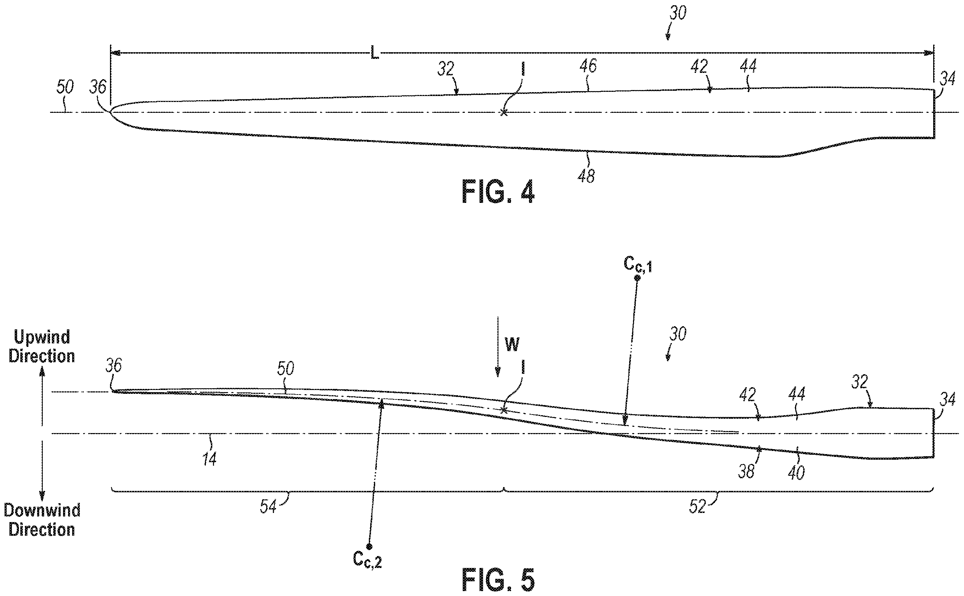

With reference to Figs. 4 and 5, a wind turbine blade 30 configured to be used on the wind turbine 20 may be configured as an elongate structure or body having an outer airfoil shell 32 disposed about an inner support element or spar (not shown). The elongate blade 30 includes a first root end 34 which is configured to be coupled to the central hub 28 when mounted to rotor 26, and a tip end 36 longitudinally opposite to root end 34. In the orientation shown in Figs. 4 and 5, the outer shell 32 may include a first, lower shell half 38 that defines the suction side 40 of the blade 30, and a second, upper shell half 42 that defines the pressure side 44 of the blade 30. The lower and upper shell halves 38, 42 are coupled together along a leading edge 46 and a trailing edge 48 located opposite one another across a chord of the blade 30. The blade 30 generally defines a longitudinal axis 50 along the length of the blade 30 between the root end 34 and the tip end 36. The longitudinal axis 50 is generally defined by the collection of points generally located midway between the leading and trailing edges 46, 48 along the length of the blade 30. Although the blade 30 has been described generally as an inner spar having an outer shell, other blade designs may also be used in embodiments of the invention and aspects of the invention should not be limited to the specific design of the blade shown and described herein.

In an exemplary embodiment, the blade 30 includes a pre-bend such that when the blade 30 is mounted onto the wind turbine 20 and oriented in a normal, operative position (but aerodynamically unloaded), the blade 30 is configured to curve or bend in the upwind direction, similar to standard pre-bent blades, such that the tip end 36 of the blade 30 is positioned more upwind than the root end 34 of the blade 30. However, the shape of the pre-bend in blade 30 differs from that of the standard pre-bent blade, such as blade 10 illustrated in Figs. 1 and 2. More particularly, and in accordance with an aspect of the invention, the blade 30 is pre-bent in the upwind direction so as to have a "serpent" configuration characterized by an inflection point I located along the length of the blade 30 between the root end 34 and the tip end 36 (Fig. 5). As used herein, an inflection point refers to a location along the blade 30 for which the curvature, as defined by the second derivative of the curve that defines the longitudinal axis 50 of the blade 30, is zero or substantially zero. When the inflection point I occurs at an interior portion of the blade 30 (i.e., not at the root end 34 of the tip end 36), then the curvature changes sign across the inflection point (i.e., goes from negative to positive or vice versa depending on how the curvature is defined).

Figs. 4 and 5 illustrate an exemplary embodiment of a wind turbine blade 30 having a serpent configuration in accordance with the invention. In this regard, the blade 30 includes an inflection point I at an interior portion of the blade 30 where the curvature of the blade 30 is zero or substantially zero. The inflection point I is located along a central portion of the blade 30. More particularly, the inflection point I is located between about 30% and about 70% of the blade length L. Even more particularly, the inflection point I may be located between about 30% and about 50% of the blade length L. In the reference frame shown in Fig. 5 (i.e., when viewing the blade 30 from a direction substantially perpendicular to a plane generally parallel to the wind direction), along a first portion 52 of the blade 30, i.e., from the root end 34 to the inflection point I, the curvature of the blade 30 may be positive, and along a second portion 54 of the blade 30, i.e., from the inflection point I to the tip end 36, the curvature of the blade 30 may be negative..

As noted above, this concept of inflection point I and change in the sign of curvature may be expressed in other ways. By way of example, in the reference frame shown in Fig. 5 (i.e., again when viewing the blade 30 from a direction substantially perpendicular to a plane generally parallel to the wind direction), a first portion 52 of the blade 30 may have a center of curvature $C_{c,1}$ on the upper or upwind side of the blade 30. In contrast to this, a second portion 54 of the blade 30 may have a center of curvature $C_{c,2}$ on the opposite or downwind side of the blade 30, where the center of curvature switches sides of the blade 30 at the inflection point I. This has been illustrated in Fig. 5 as well.

While the serpent configuration of the pre-bent blade 30 may have several forms, in one embodiment of the invention, the pre-bent shape of the blade 30, as provided by the longitudinal axis 50, for example, may generally be defined according to the parameterized equation:

$$P(x) = A \frac{\tanh\left(\frac{x-i}{s}\right) - \tanh\left(\frac{i}{s}\right)}{\tanh\left(\frac{L-i}{s}\right) - \tanh\left(\frac{i}{s}\right)}$$

where x is the distance along the blade from the root end 34; A is the pre-bend amplitude at the tip end 36 of the blade; L is the length of the blade from the root end 34; i is the location of the inflection point I; and s is the spread or softness of the curve. In various embodiments, the amplitude A of the pre-bend may be related to the blade length L and be between about 3% and about 7% of the blade length L. As noted above, the inflection point I is located in the central portion of the blade, between about 30% and about 70% of the blade length L, and more particularly it may be between about 30% and about 50% of the blade length L. Lastly, the softness of the curve may be between about 10% and about 60% of the blade length L. In one particular embodiment, a pre-bent blade 30 may be defined by the equation above with the amplitude A at about 3.5 m; the length of the blade at about 58 m; the inflection point location i at about 36 m; and the softness s at about 20 m. These values and the above ranges are exemplary and it should be recognized that other values may be selected depending on the particular application. In this regard, the equation above may be subject to an optimization process to determine a desired shape depending of the circumstances of the particular application.

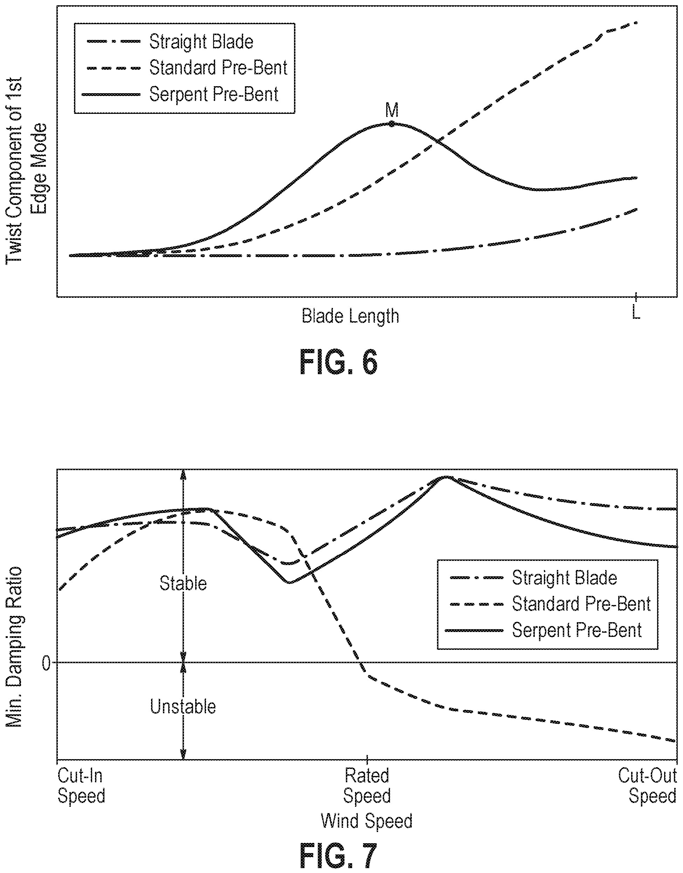

Without being limited to any particular theory, it is believed that by providing an inflection point I in the interior of the blade 30, the net effect is to shift the twist component of the bent-twist coupling toward the root end 34 of the blade 30 and away from the tip end 36, which is most vulnerable to the instability. In this regard, Fig. 6 illustrates a schematic diagram of the twist component of the first edgewise mode versus the blade length for a straight blade, a standard pre-bent blade, and a serpent blade in accordance with aspects of the invention as informed from numerical calculations. As one can clearly see, the straight blade has a very small (e.g., substantially zero) twist component along a substantial portion of the blade length, with only a slight rise near the tip end of the blade. Straight blades are considered very stable and do not generally exhibit an instability in above-rated wind conditions.

In contrast to this, the standard pre-bent blade has a small twist component of the first edgewise mode shape near the root end of the blade, but starts increasing in a substantially linear manner such that the twist component is at a maximum value at the tip end of the blade. As noted above, the inventors believe the bend-twist coupling is the mechanism behind the instability and the propensity of the blade to twist with bend is relatively high at the tip end of standard pre-bent blade. This may explain, for example, why the instability manifests itself at the tip end of the blade in above-rated wind conditions.

As illustrated in Fig. 6, the serpent pre-bent blade configuration results in a significant shift of the twist component of the bent-twist coupling toward the root end 34 of the blade 30. In this regard, a maximum M of the twist component of the first edgewise mode shape is moved to an interior portion of the blade 30, such as along a central portion of the blade 30. The twist component thus increases along a first portion of the blade 30, i.e., from the root end 34 to the location of the maximum twist component M, which in an exemplary embodiment may occur between about 40% to about 60% of the blade length L. Importantly, however, after the maximum point M, the twist component decreases along a second portion of the blade 30, i.e., from the location of the maximum twist component M to the tip end 36 of the blade 30. Accordingly, near the tip end 36 of the blade 30, the twist component of the first edgewise mode shape is significantly reduced as compared to the standard pre-bent blade. In this regard, the twist component may be reduced between about 40% and about 70% of the twist component in the standard pre-bent blade in this exemplary embodiment.

Due to this significant reduction in the twist component near the tip end 36 of the blade 10, the inventors believe that the propensity for the blade 10 to exhibit an instability in above-rated wind conditions has been significantly decreased. Thus, by the serpent design as described herein, the blade 10 has improved stability characteristics in above-rated wind conditions and provides sufficient clearance with the tower so as to reduce the likelihood of a tower strike. In this regard, Fig. 7 illustrates a schematic diagram of the minimum damping ratio versus wind speed for a straight blade, a standard pre-bent blade, and a serpent blade in accordance with aspects of the invention as informed from numerical calculations. The minimum damping ratio is generally understood as providing an indication of stability, with a positive minimum damping ratio indicating a stable configuration and a negative minimum damping ration indicating an unstable configuration. As one can clearly see, the straight blade has a positive minimum damping ratio over the working range of wind speeds between a typical cut-in wind speed (e.g., about 4 m/s) and a typical cut out wind speed (e.g., about 20 m/s). Accordingly, the straight blade is considered stable over a broad range of wind conditions, including above-rated wind conditions (e.g. about 12 m/s).

In contrast to this, the standard pre-bent blade has a positive minimum damping ratio over a range of wind speeds less than about the rated wind speed, but has a negative minimum damping ratio for wind speeds generally greater than the rated wind speed. Thus, as discussed above, the standard pre-bent blade is considered unstable in above-rated wind conditions. As illustrated in Fig. 7, the serpent pre-bent blade has a minimum damping ratio similar to that of the straight wind turbine blade. More particularly, serpent pre-bent blade has a positive minimum damping ratio over the working range of wind speeds between the cut-in wind speed and the cut out wind speed. Accordingly, the serpent pre-bent blade is considered stable over a broad range of wind conditions, including above-rated wind conditions.

The wind turbine blade 30 may be formed through a molding process, as is generally known in the art. In this regard, a molding apparatus (not shown) may include two shell halves corresponding to, for example, the lower shell half 38 and the upper shell half 42 of the outer shell 32 of the wind turbine blade 30. Each of the mold shell halves may be formed or contoured to provide the desired pre-bend in the blade 30. Fiber and resin material may be introduced into the mold halves in the usual manner to form the blade shell halves 38, 42. When the blade shell halves 38, 42 are at least partially cured, the mold halves 38, 42 may be mated together to form the wind turbine blade 30 having the desired pre-bend configuration.

**Claims**

1. A wind turbine blade (30) for a wind turbine (20), comprising:

   an elongate body having a root end (34), a tip end (36), a leading edge (46), a trailing edge (48), a pressure side (44) and a suction side (40), the elongate body defining a longitudinal axis (50) extending along a length of the elongate body from the root end to the tip end, wherein the elongate body has a pre-bend formed therein configured such that when the wind turbine blade (30) is mounted on the wind turbine and oriented in an operative position, the blade curves in an upwind direction such that the tip end (36) of the blade is positioned more upwind than the root end of the blade (34), and wherein the curve that defines the longitudinal axis of the elongate body has an inflection point (I) between the root end (34) and the tip end (36) of the blade (30) such that the longitudinal axis of the elongate body includes a first portion (52) having a center of curvature ($C_{c,1}$) on the upwind side of the blade and a second portion (54) having a center of curvature ($C_{c,2}$) on the downwind side of the blade;

   wherein the first portion (52) is adjacent the root end (34) of the blade and the second portion (54) is adjacent the tip end of the blade (36);

   wherein the inflection point (I) is located along a central portion of the blade and is located between about 30% and about 70% of the blade length L.

2. The wind turbine blade (30) according to claim 1, wherein the pre-bend in the elongate body is defined by the longitudinal axis according to the equation:

$$P(x) = A \frac{\tanh\left(\frac{x-i}{s}\right) - \tanh\left(\frac{i}{s}\right)}{\tanh\left(\frac{L-i}{s}\right) - \tanh\left(\frac{i}{s}\right)}$$

where x is the distance along the blade from the root end (34); A is the pre-bend amplitude at the tip end of the blade; L is the length of the blade from the root end; i is the location of an inflection point; and s is the spread of the curve.

3. The wind turbine blade according to claim 1, wherein the inflection point (I) is located between about 30% and about 50% of the blade length L.

4. The wind turbine blade according to any of claims 2-3, wherein the pre-bend amplitude A is between about 3% and about 7% of the blade length L.

5. The wind turbine blade according to any of claims 2-4, wherein the spread s may be between about 10% and about 60% of the blade length L.

6. A wind turbine (20), comprising:

a tower (22);

a nacelle (24) disposed adjacent a top of the tower; and

a rotor (26) including a hub (28) and at least one wind turbine blade (30) according to any of claims 1-5 extending from the hub.

**Patentansprüche**

1. Windkraftanlagenblatt (30) für eine Windkraftanlage (20), umfassend:

einen länglichen Körper, der ein Wurzelende (34), ein Spitzenende (36), eine Blattvorderkante (46), eine Blatthinterkante (48), eine windzugewandte Seite (44) und eine windabgewandte Seite (40) aufweist, wobei der längliche Körper eine Längsachse (50) definiert, die sich entlang einer Länge des länglichen Körpers von dem Wurzelende zu dem Spitzenende erstreckt,

wobei der längliche Körper eine darin ausgebildete Vorbiegung aufweist, die so konfiguriert ist, dass, wenn das Windkraftanlagenblatt (30) an der Windkraftanlage angebracht und in einer Betriebsposition ausgerichtet ist, sich das Blatt in einer luvseitigen Richtung krümmt, so dass das Spitzenende (36) des Blattes mehr luvseitig positioniert ist als das Wurzelende des Blattes (34), und

wobei die Krümmung, die die Längsachse des länglichen Körpers definiert, einen Umschlagspunkt (I) zwischen dem Wurzelende (34) und dem Spitzenende (36) des Blattes (30) aufweist, so dass die Längsachse des länglichen Körpers einen ersten Abschnitt (52) einschließt, der einen Krümmungsmittelpunkt ($C_{c,1}$) auf der Luvseite des Blattes aufweist, und einen zweiten Abschnitt (54), der einen Krümmungsmittelpunkt ($C_{c,2}$) auf der Leeseite des Blattes aufweist;

wobei der erste Abschnitt (52) an das Wurzelende (34) des Blattes angrenzt und der zweite Abschnitt (54) an das Spitzenende der des Blattes (36) angrenzt;

wobei sich der Umschlagspunkt (I) entlang eines mittleren Abschnitts des Blattes befindet und sich zwischen etwa 30% und etwa 70% der Blattlänge L befindet.

2. Windkraftanlagenblatt (30) nach Anspruch 1, wobei die Vorbiegung in dem länglichen Körper durch die Längsachse gemäß der folgenden Gleichung definiert ist:

$$P(x) = A \frac{\tanh\left(\frac{x-i}{s}\right) - \tanh\left(\frac{i}{s}\right)}{\tanh\left(\frac{L-i}{s}\right) - \tanh\left(\frac{i}{s}\right)}$$

wobei x der Abstand entlang des Blattes vom Wurzelende (34), A die Vorbiegungs-Amplitude am Spitzenende des Blattes, L die Länge des Blattes vom Wurzelende, i die Lage eines Umschlagspunktes und s die Spannweite der Krümmung ist.

3. Windkraftanlagenblatt nach Anspruch 1, wobei sich der Umschlagspunkt (I) zwischen etwa 30% und etwa 50% der Blattlänge L befindet.

4. Windkraftanlagenblatt nach einem der Ansprüche 2-3, wobei die Vorbiegungs-Amplitude A zwischen etwa 3 % und etwa 7 % der Blattlänge L beträgt.

5. Windkraftanlagenblatt nach einem der Ansprüche 2-4, wobei die Spannweite s zwischen etwa 10 % und etwa 60 % der Blattlänge L betragen kann.

6. Windkraftanlage (20), umfassend:

einen Turm (22);

eine Gondel (24), die angrenzend an der Spitze des Turms angeordnet ist; und

einen Rotor (26) einschließlich einer Nabe (28) und mindestens einem von der Nabe ausgehenden Windkraftanlagenblatt (30) nach einem der Ansprüche 1-5.

**Revendications**

1. Pale d'éolienne (30) pour une éolienne (20), comprenant :

un corps allongé présentant une extrémité pied (34), un bout de pale (36), un bord d'attaque (46), un bord de fuite (48), un intrados (44) et un extrados (40), le corps allongé définissant un axe longitudinal (50) s'étendant le long d'une longueur du corps allongé à partir de l'extrémité pied jusqu'au bout de pale,

dans laquelle le corps allongé présente une précourbure formée dans celui-ci configurée de telle sorte que lorsque la pale d'éolienne (30) est montée sur l'éolienne et orientée dans une position de fonctionnement, la pale s'incurve dans une direction face au vent de telle sorte que le bout de pale (36) de la pale soit positionné plus face au vent que l'extrémité pied de la pale (34), et

dans laquelle l'incurvation qui définit l'axe longitudinal du corps allongé présente un point d'inflexion (I) entre l'extrémité pied (34) et le bout de pale (36) de la pale (30) de telle sorte que l'axe longitudinal du corps allongé inclue une première portion (52) présentant un centre d'incurvation ($C_{c,1}$) sur le côté face au vent de la pale et une seconde portion (54) présentant un centre d'incurvation ($C_{c,2}$) sur le côté sous le vent de la pale ;

dans laquelle la première portion (52) est adjacente à l'extrémité pied (34) de la pale et la seconde portion (54) est adjacente au bout de pale de la pale (36) ;

dans laquelle le point d'inflexion (I) est situé le long d'une portion centrale de la pale et est situé entre environ 30 % et environ 70 % de la longueur de pale L.

2. Pale d'éolienne (30) selon la revendication 1, dans laquelle la pré-courbure dans le corps allongé est définie par l'axe longitudinal selon l'équation :

$$P(x) = A \frac{\tanh\left(\frac{x-i}{s}\right) - \tanh\left(\frac{i}{s}\right)}{\tanh\left(\frac{L-i}{s}\right) - \tanh\left(\frac{i}{s}\right)}$$

où x est la distance le long de la pale à partir de l'extrémité pied (34) ; A est l'amplitude de pré-courbure au bout de pale de la pale ; L est la longueur de la pale à partir de l'extrémité pied ; i est l'emplacement d'un point d'inflexion ; et s est l'ampleur de l'incurvation.

3. Pale d'éolienne selon la revendication 1, dans laquelle le point d'inflexion (I) est situé entre environ 30 % et environ 50 % de la longueur de pale L.

4. Pale d'éolienne selon l'une quelconque des revendications 2-3, dans laquelle l'amplitude de pré-courbure A est entre environ 3 % et environ 7 % de la longueur de pale L.

5. Pale d'éolienne selon l'une quelconque des revendications 2-4, dans laquelle l'ampleur s peut être entre environ 10 % et environ 60 % de la longueur de pale L.

6. Eolienne (20), comprenant :

une tour (22) ;
une nacelle (24) disposée adjacente à un sommet de la tour ; et
un rotor (26) incluant un moyeu (28) et au moins une pale d'éolienne (30) selon l'une quelconque des revendications 1-5 s'étendant à partir du moyeu.

FIG. 1
PRIOR ART

FIG. 2

**FIG. 3**

**FIG. 4**

**FIG. 5**

EP 3 077 661 B1

**FIG. 6**

**FIG. 7**

**EP 3 077 661 B1**

**Patent documents cited in the description**

- EP 1019631 A
- EP 2141355 A
- WO 2013083130 A
- EP 2169217 A